## Europäisches Patentamt
## European Patent Office
## Office européen des brevets

(19)

(11) Veröffentlichungsnummer: **0 161 208**
**B1**

(12) **EUROPÄISCHE PATENTSCHRIFT**

(45) Veröffentlichungstag der Patentschrift:
02.09.87

(51) Int. Cl.⁴: **H 02 K 9/28, H 01 R 43/14**

(21) Anmeldenummer: 85730066.9

(22) Anmeldetag: 07.05.85

(54) **Elektrische Maschine mit einer Stromzuführung über Bürsten und Schleifringe zum Läufer.**

(30) Priorität: 11.05.84 DE 3418014

(43) Veröffentlichungstag der Anmeldung:
13.11.85 Patentblatt 85/46

(45) Bekanntmachung des Hinweises auf die Patenterteilung:
02.09.87 Patentblatt 87/36

(84) Benannte Vertragsstaaten:
AT CH DE LI

(56) Entgegenhaltungen:
CH-A-530 727
DE-B-1 231 798
DE-C-496 818
DE-C-504 351
FR-A-350 275

(73) Patentinhaber: Siemens Aktiengesellschaft Berlin und München, Wittelsbacherplatz 2, D-8000 München 2 (DE)

(72) Erfinder: Spirk, Franz, Schuckertdamm 322, D-1000 Berlin 13 (DE)

EP 0 161 208 B1

### Beschreibung

Die Erfindung bezieht sich auf eine elektrische Maschine mit einer Stromzuführung über Bürsten und Schleifringe zum Läufer, bei der in Umfangsrichtung der Schleifringe verlaufende ringförmige Sammelräume für Bürstenstaub vorgesehen sind, die mit einer Unterdruckquelle verbunden sind und in die über unmittelbar neben den Auflageflächen der an Bürstenträgern befestigten Bürsten liegende Absaugöffnungen Luft und Bürstenstaub angesaugt ist, wobei die Luft und der in ihr enthaltene Bürstenstaub über einen weiteren gemeinsamen Sammelraum in einen Außenraum geleitet ist.

Eine derartige elektrische Maschine mit einer Vorrichtung zur Absaugung des Bürstenstaubes, die gleichzeitig zur Kühlung der Schleifringe dient, ist aus der DE-OS 21 23 278 bekannt. Bei der bekannten Maschine liegen die ringförmigen Sammelräume zur Absaugung des Bürstenstaubes und der Kühlluft auf der dem Bürstenträger abgewandten Seite der Bürste. Sie sind jeweils mit radial gerichteten, rohrförmigen Absaugkanälen verbunden, die sich vor der Bürste bis zur Oberfläche des Schleifringes erstrecken und so die unmittelbar vor der Bürstenauflagefläche liegende Absaugöffnung bilden. Die Schleifringoberfläche ist mit einer schraubenlinienförmigen Rillung versehen, die zu den Absaugöffnungen hinführt. Da die Absaugöffnungen in Umfangsrichtung auf den Bürstenbereich beschränkt sind, besteht aber noch die Möglichkeit, daß in den Rillen des Schleifringes verbleibender Staub doch im Zwischenraum zwischen den Absaugöffnungen in den Schleifringraum austreten und sich dort auf den Isolierteilen ablagern kann, wodurch bekanntlich Kriechstromwege gebildet werden, welche die Spannungsfestigkeit herabsetzen. Außerdem ist bei der bekannten Maschine die Bürste von beiden Seiten her der Zugänglichkeit für Wartung und Kontrolle behindert.

Der Erfindung liegt die Aufgabe zugrunde, bei einer elektrischen Maschine der eingangs beschriebenen Art die Bürstenstaubabsaugvorrichtung so zu verbessern, daß die Zugänglichkeit der Bürste gegenüber der bei einer normalen Ausführung ohne Absaugvorrichtung nicht beeinträchtigt wird und daß aller Bürstenstaub mit Sicherheit abgesaugt wird.

Zur Lösung dieser Aufgabe ist die elektrische Maschine der eingangs beschriebenen Art so ausgebildet, daß die ringförmigen Sammelräume innerhalb des mittels zweier Isolatoren am gemeinsamen Sammelraum befestigten Bürstenträgers angeordnet und von den Bürstenbolzen Durchsetzt sind, daß die Absaugöffnungen der ringförmigen Sammelräume ebenfalls ringförmig den Schleifring umgeben und daß jeder ringförmige Sammelraum über zumindest einen dickwandigen Glaszylinder mit dem weiteren gemeinsamen Sammelraum verbunden ist.

Durch die Anordnung der ringförmigen Sammelräume innerhalb des Bürstenträgers entsteht für die Bürstenstaub absaugvorrichtung kein zusätzlicher Raumbedarf neben der Bürste, so daß deren Zugänglichkeit wie bei normalen Maschinen ohne eine derartige Vorrichtung gegeben ist. Da die Bürstenbolzen die ringförmigen Sammelräume durchsetzen, werden diese mechanisch versteift, so daß die Bürstenträger im Bereich der Sammelräume mit entsprechend dünnen Wandstärken ausgebildet sein können. Die Gefahr eines Absetzens von Bürstenstaub an den Bürstenbolzen ist wegen derer runden glatten Oberfläche kaum gegeben, und außerdem kann dort kein zusätzlicher äußerer Kriechweg entstehen.

Da sich die Absaugöffnung ringförmig um den Schleifring erstreckt, wird der Bürstenstaub entlang des gesamten Umfanges des Schleifringes gleichmäßig abgesaugt. Allerdings macht die Anordnung der Sammelräume innerhalb des Bürstenträgers eine Isolierung der Luft- und Staubableitung in den gemeinsamen weiteren Sammelraum erforderlich. Jedoch kann diese unterhalb der Schleifringanordnung vorgenommen werden, wo genügend freier Raum für den notwendigen Isolationsabstand gegeben ist. Dort ist auch jeder Bürstenträger selbst über zwei Isolatoren am gemeinsamen Sammelraum befestigt. Die Isolierung der Luft und Staubableitung erfolgt bei jedem ringförmigen Sammelraum über zumindest einen dickwandigen Glaszylinder. Bekanntlich setzt sich Kohlenstaub schlecht auf Glasflächen ab, so daß die Gefahr einer Kriechwegbildung infolge einer Belagbildung auf den Innerflächen des Glaszylinders sehr gering ist. Außerdem ergibt der Glaszylinder den Vorteil, daß eine optische Überprüfung der inneren Sauberkeit des Glaszylinders möglich ist.

Da bei der gemäß der Erfindung ausgebildeten elektrischen Maschine die Ablagerung von Bürstenstaub innerhalb des Schleifringraumes durch die gleichmäßige Absaugung über den gesamten Umfang der Schleifringe mit Sicherheit vermieden ist, können die wartungsfreien Zeiten für den Betrieb der Maschine vergrößert werden, wodurch sich deren Verfügbarkeit erhöht.

Es ist besonders vorteilhaft, die Bürsten und Schleifringe paarweise anzuordnen und dann den Bürstenträger mit dem ringförmigen Sammelraum jeweils mittig zu legen. Dadurch wird die Bürstenstaubabsaugevorrichtung besonders raumsparend ausgeführt.

Zur weiteren mechanischen Versteifung sowohl der Bürstenträgeranordnung als auch der Bürstenabsaugvorrichtung empfiehlt es sich, die Bürstenträger untereinander durch Isolierbolzen verbinden.

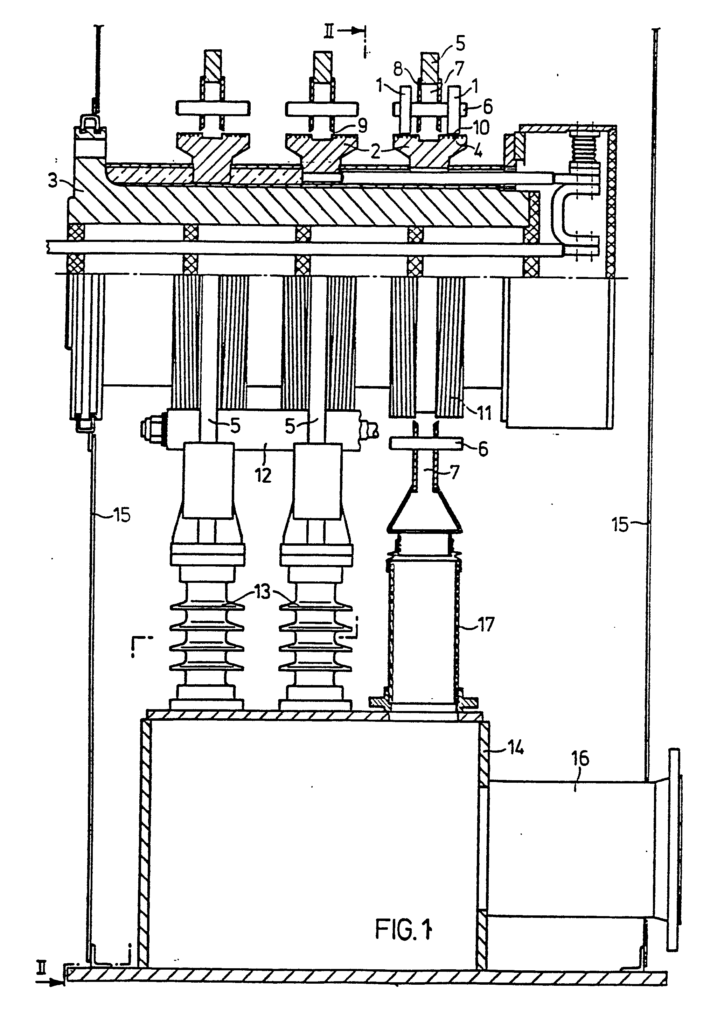

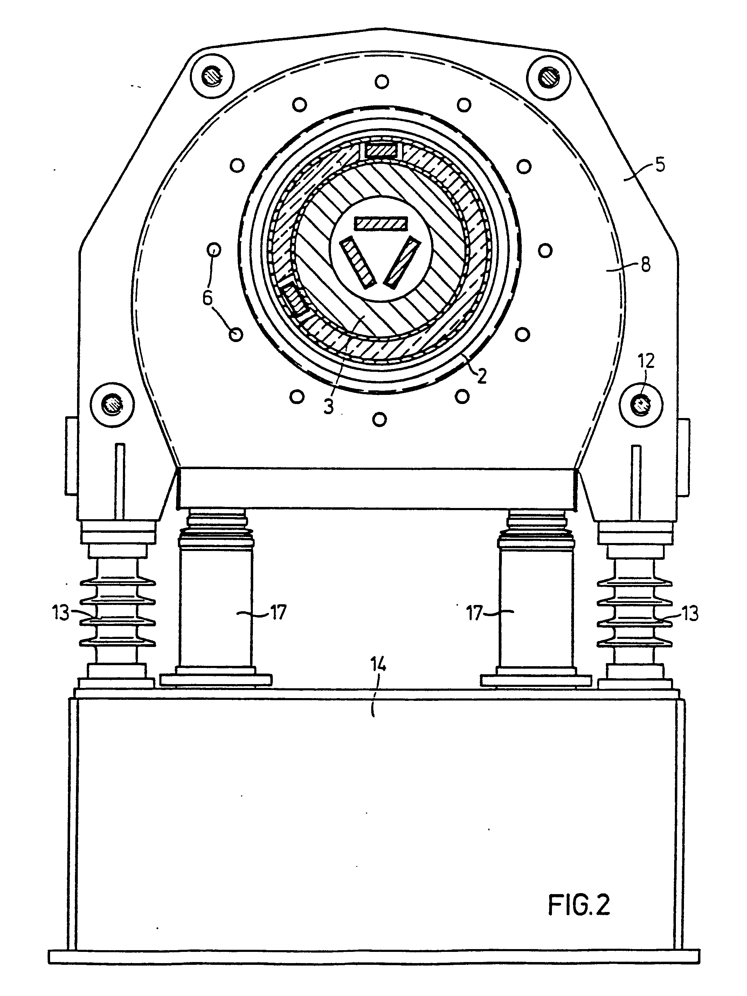

Im folgenden sei die Erfindung noch anhand des in den Figuren 1 und 2 dargestellten Ausführungsbeispiels näher erläutert. Fig. 1 zeigt den Bürsten- und Schleifringraum der elektrischen Maschine, teilweise in verschiedenen Ebenen geschnitten. Fig. 2 zeigt eine Radialschnitt dieses Raumes längs der Ebene II-II in Fig. 1, in dem die Bürsten nicht dargestellt sind.

Bei einer elektrischen Maschine, z. B. einem elektrischen Motor mit Schleifringläufer, wird der Strom auf den Läufer über Bürsten 1 und Schleifringe 2 übertragen. Die Schleifringe 2 der drei Phasen der Läuferwicklung sind jeweils paarweise auf der Läuferwelle 3 angeordnet, bzw. die Schleifringoberfläche 4 ist mittig unterteilt, und zwei Bürsten 1 sind jeweils am mittig liegenden Bürstenträger 5 angeordnet und werden von einem Bürstenbolzen 6 getragen. Die Bürsten 1 sind in der Figur 1 nur schematisch angedeutet ohne die besondere Haltevorrichtungen zwischen dem Bürstenbolzen 6 und der Bürste 1 zu zeigen.

Damit die zwischen den notwendigen Wartungen der Bürsten liegende Zeit möglichst verlängert werden kann, ist eine Vorrichtung zur Absaugung des Bürstenstaubes, der durch den Abrieb der Bürste bei dem Betrieb der Maschine entsteht, vorgesehen. Diese enthält ringförmige Sammelräume 7, die im Innern des Bürstenträgers 5 liegen. Die ringförmigen Sammelräume 7 sind durch das Anschweißen von dünnwandigen Blechen 8 an den massiven Teil des Bürstenträgers 5 entstanden. Diese Bleche 8 werden von den Bürstenbolzen 6 durchsetzt und somit gegeneinander versteift. Die Sammelräume 7 bzw. die Bleche 8 umgeben die Schleifringe 2 ringförmig und weisen über deren gesamten Umfang auf jeder Seite eine ebenfalls ringförmige Absaugöffnung 9 auf, die unmittelbar neben den Bürstenauflageflächen 10 liegt. Zur Unterstützung der Hinführung des Bürstenstaubes zur Absaugöffnung 9 ist der Schleifring 2 jeweils mit nur schematisch angedeuteten Rillen II versehen, die schraubenlinienförmig jeweils bezogen auf die Drehrichtung zur Absaugöffnung 9 hinführen.

Die Bürstenträger 5 der drei Phasen der Läuferwicklung sind zur mechanischen Versteifung untereinander durch mehrere, längs des Umfanges verteilte Isolierbolzen 12 miteinander verbunden. Da die Spannung zwischen den Phasen der Läuferwicklung verhältnismäßig groß sein kann, ist jeder Bürstenträger 5 über zwei Isolatoren 13 auf dem gemeinsamen Sammelraum 14 für die abgesaugte Luft, die den Bürstenstaub enthält, abgestützt. Dieser Sammelraum 14 befindet sich unterhalb der Schleifring- und Bürstenanordnung und liegt innerhalb einer Kapselung, deren Wände 15 nur, schematisch angedeutet, abgebrochen gezeichnet sind, die den gesamten Schleifringraum und die Bürstenanordnung umgibt. In den Wänden 15 der Kapselung sind in nicht dargestellter Weise Eintrittsöffnungen für die angesaugte Kühlluft vorgesehen, die mit einem Filter versehen sind, damit das Eindringen von Verunreinigungen vermieden wird. Der Sammelraum 14 steht mit einem in den Raum außerhalb der Kapselung führenden Anschlußstutzen 16 in Verbindung, in dem auch der nicht dargestellte Sauglüfter untergebracht sein kann, der als Unterdruckquelle für die Bürstenstaubabsaugvorrichtung dient.

Die ringförmigen Sammelräume 7 im Bürstenträger 5 haben entsprechend dem Volumen der angesaugten, staubhaltigen Luft einen veränderlichen Querschnitt, der in Richtung auf den gemeinsamen Sammelraum 14 größer wird. Die Verbindung zwischen dem ringförmigen Sammelraum 7 und dem gemeinsamen Sammelraum 14 stellen zwei dickwandige Glaszylinder 17 her, welche somit die Isolierung bilden. Da sich bekanntlich Bürstenstaub schlecht auf einer Glasoberfläche absetzt, ist die Gefahr, daß die notwendige Isolierung hier durch einen von Kohlenstaub gebildeten Belag auf der Innenfläche des Glaszylinders 17 überbrückt wird, gering. Außerdem ist durch die Durchsichtigkeit des Glases eine Kontrollmöglichkeit gegeben, so daß eine Verunreinigung der inneren Oberfläche des Glaszylinders 17 rechtzeitig erkannt werden kann.

Durch diese Bürstenstaubabsaugvorrichtung, welche infolge der innerhalb des Bürstenträgers 5 liegenden Sammelräume 7 keinen zusätzlichen Raumbedarf erfordert, wird der während des Betriebes der Maschine abgeriebene Bürstenstaub gleichmäßig längs des gesamten Umfanges der Schleifringe 2 abgesaugt. Er tritt dann durch das Innere der Glaszylinder 17 hindurch in den gemeinsamen Sammelraum 14 über und wird durch den Anschlußstutzen 16 ins Freie geleitet. Dadurch wird vermieden, daß sich der abgeriebene Bürstenstaub an unerwünschten Stellen niedersetzt und somit Kriechstromwege bilden kann. Die zwischen den notwendigen Wartungen der Bürsten liegenden Zeiten werden somit allein durch die Bürsten bestimmt.

**Patentansprüche**

1. Elektrische Maschine mit einer Stromzuführung über Bürsten (1) und Schleifringe (2) zum Läufer, bei der in Umfangsrichtung der Schleifringe (2) verlaufende ringförmige Sammelräume (7) für Bürstenstaub vorgesehen sind, die mit einer Unterdruckquelle verbunden sind und in die über unmitelbar neben den Auflageflächen der am Bürstenträger (5) befestigten Bürsten (1) liegende Absaugöffnungen (9) Luft und Bürstenstaub angesaugt ist, wobei die Luft und der in ihr enthaltene Bürstenstaub über einen weiteren gemeinsamen Sammelraum (14) in einen Außenraum geleitet ist,
dadurch gekennzeichnet, daß die ringförmigen Sammelräume (7) innerhalb des mittels zweier Isolatoren (13) am gemeinsamen Sammelraum (14) befestigten Bürstenträgers (5) angeordnet und von den Bürstenbolzen (6) durchsetzt sind, daß die Absaugöffnungen (9) der ringförmigen Sammelräume (7) ebenfalls ringförmig den Schleifring (2) umgeben und daß jeder ringförmige Sammelraum (7) über zumindest einen dickwandigen Glaszylinder (17) mit dem weiteren gemeinsamen Sammelraum (14) verbunden ist.

2. Elektrische Maschine nach Anspruch 1, dadurch gekennzeichnet, daß die Bürsten (1) und Schleifringe (2) paarweise angeordnet sind und der Bürstenträger (5) mit dem ringförmigen Sammelraum (7) jeweils mittig liegt.

3. Elektrische Maschine nach Anspruch 1 oder 2, dadurch gekennzeichnet, daß die Schleifringe (2) mit schraubenlinienförmig zur Absaugöffnung (9) hin laufenden Rillen (11) versehen sind.

4. Elektrische Maschine nach Anspruch 1 oder 2, dadurch gekennzeichnet, daß der Querschnitt der ringförmigen Sammelräume (7), längs des Umfanges gesehen, in Richtung auf den gemeinsamen Sammelraum (14) größer wird.

5. Elektrische Maschine nach Anspruch 1, dadurch gekennzeichnet, daß die Bürstenträger (5) untereinander durch Isolierbolzen (12) verbunden sind.


## Claims

1. An electric machine with a current supply to the rotor via brushes (1) and slip rings (2), with annular collector chambers (7) for brush dust provided which extend in the peripheral direction of the slip rings (2) and are connected to low-pressure source into which air and brush dust are sucked via suction openings (9) located directly adjacent to the bearing surfaces of the brushes (1) which are attached to the brush carrier (5), where the air and the brush dust contained therein is conducted into an outer chamber via a further, common collector chamber (14), characterised in that the annular collector chambers (7) are arranged within the brush carrier (5) attached to the common collector chamber (14) by two insulators (13), and are traversed by the brush pins (6), that the suction openings (9) of the annular collector chambers (7) surround the slip rings (2) in annular fashion, and that each annular collector chamber (7) is connected to the further, common collector chamber (14) via at least one thick-walled glass cylinder (17).

2. An electric machine as claimed in Claim 1, characterised in that the brushes (1) and the slip rings (2) are arranged in pairs, each with a brush carrier (5) and annular collector chamber (7) located centrally.

3. An electric machine as claimed in Claim 1 or 2, characterised in that the slip rings (2) are provided with channels (11) which extend in helical formation towards the suction opening (9).

4. An electric machine as claimed in Claim 1 or 2, characterised in that the cross-section of the annular collector chambers (7), considered along the periphery, increases in the direction of the common collector chamber (14).

5. An electric machine as claimed in Claim 1, characterised in that the brush carriers (5) are connected to one another by insulating pins (12).


## Revendications

1. Machine électrique avec une alimentation en courant du rotor par l'intermédiaire de balais (1) et de bagues collectrices (2), dans laquelle il est prévu dans le sens périphérique de ces dernières, des chambres collectrices (7) pour la poussière des balais, qui s'étendent suivant une allure annulaire, qui sont reliées à une source de dépression et dans lesquelles est aspiré l'air et la poussière des balais à travers des ouvertures d'aspiration (9) qui se situent directement près des surfaces d'appui des balais (1) qui sont fixés sur le support porte-balais (5), l'air et la poussière de charbon qui s'y trouvent étant évacués dans une chambre extérieure, par l'intermédiaire d'une seconde chambre collectrice commune (14), caractérisée par le fait que les chambres collectrices (7) de forme annulaire sont disposées dans le support porte-balais (5) qui est fixé à l'aide de deux isolateurs (13) à la chambre collectrice commune (14), et sont traversées par les tourillons de porte-balais (6), que les ouvertures d'aspiration (5) des chambres collectrices (7) de forme annulaire, entourent également annulairement la bague collectrice (2), et que chaque chambre collectrice (7) de forme annulaire est reliée, par l'intermédiaire d'un cylindre de verre (17) à paroi épaisse, à la seconde chambre collectrice commune (14).

2. Machine électrique selon la revendication 1, caractérisée par le fait que les balais (1) et les bagues collectrices (2) sont disposés par paires et que le support porte-balais (5) se situe en position centrée par rapport à la chambre collectrice (7) correspondante de forme annulaire.

3. Machine électrique selon la revendication 1 ou 2, caractérisée par le fait que les bagues collectrices (2) sont pourvues de sillons de forme hélicoïdale qui s'étendent vers l'ouverture d'aspiration (9).

4. Machine électrique selon la revendication 1 ou 2, caractérisée par le fait que la section transversale des chambres collectrices (7) de forme annulaire, croît, dans le sens périphérique, en direction de la chambre collectrice commune (14).

5. Machine électrique selon la revendication 1, caractérisée par le fait que les supports porte-balais (5) sont reliés entre eux par des boulons isolants (12).

FIG. 1

FIG.2